# EUROPEAN PATENT SPECIFICATION

(11) **EP 1 169 600 B1**
(45) Date of publication and mention of the grant of the patent: **01.06.2005**
(21) Application number: 00918986.1
(22) Date of filing: 29.03.2000
(51) Int. Cl.: F16M 11/16, F16M 11/32, F16M 11/34, E06C 1/38

(54) **A THREE-LEGGED ASSEMBLY**
VORRICHTUNG MIT DREI SCHENKELN
ENSEMBLE TROIS PIEDS

(30) Priority: 01.04.1999 GB 9907726
(43) Date of publication of application: 09.01.2002
(73) Proprietor: Kirk-Alton, Julian William, Scunthorpe DN16 3RF (GB)
(72) Inventor: Kirk-Alton, Julian William, Scunthorpe DN16 3RF (GB)
(74) Representative: Billington, Lawrence Emlyn
(86) International application number: PCT/GB2000/001202
(87) International publication number: WO 2000/060275

(56) References cited:
- DE-A- 3 629 459
- DE-U- 9 201 579
- US-A- 1 976 345
- US-A- 2 262 938
- US-A- 2 275 743

## Description

This invention relates to a three-legged assembly.

Three-legged assemblies are employed to provide support structures of several different types, for example step ladders, seat supports, and tripod supports for cameras or telescopes.

Examples of three-legged step ladders can be found more particularly in United States patent No. 4,524,849, and United States design patent No. 267,817.

It is desirable for such an assembly to provide a rigid and stable configuration when in use, yet to be collapsible in order to take up little storage space when not in use.

A medical stand is known from DE-U-9201579, wherein legs are wedged in outward pivotal positions. This is not, however, a ladder assembly having a working platform for carrying a person.

According to the present invention there is provided an assembly having three legs which are pivotably mounted at their upper ends, said legs being associated with stop means to define a limit of outward pivoting for said legs and with wedging means movable upwards between said legs to urge them outwardly against said stop means thereby to define, with said stop means, predetermined pivotal positions of said legs, said wedging means being coupled to a support member which is arranged to move upwardly with said wedging means to provide a support above an apex of the assembly, said support member also being arranged to move downwardly from above the apex of the assembly thereby to move the wedging means downwardly, characterised in that the assembly is a ladder comprising steps mounted on at least one of the legs and leading upwardly to a working platform which is supported at the apex of the assembly and is adapted to carry a person when the ladder is in an erected configuration with its legs urged outwardly by the wedging means being in an upward wedging position, and with the support member being in a corresponding upwards position to be able to serve as a steadying support above the working platform for a person on the working platform.

When the wedging means is in an upper position the assembly will be in a rigid and stable condition, whilst when the wedging means has been moved downwards the legs may be pivoted inwardly to provide a collapsed and compact configuration of the assembly.

The wedging means may comprise a wedging member (possibly in the form of a block) having one or more wedging surfaces to urge the respective legs outwardly as aforesaid.

Such wedging member may be attached to a rod as the support member, which is moveable up and down with the wedging member, and there may be a fastening system associated with the wedging member and/or the support member to secure the wedging member in its upwards position.

The support member may extend through an aperture in the working platform supported at the apex of the assembly, the support member preferably being moveable downwardly at a location from above the working platform.

The top end of the support member can be formed with an actuating handle for moving the wedging means downwards, which may also serve as a steadying support for a person on the working platform when the assembly is in its erected configuration.

The legs of the assembly may be pivoted at or just below the working platform such as has been mentioned, with the stop means being provided as part of, or being secured to, the working platform.

In one embodiment the stop means may be provided at least partly by the edges of rigid sheet material. Possibly the working platform is itself formed of this rigid sheet material, with the stop means preferably being provided at least partly by the lower inner edges of the rigid sheet material after it has been folded-under along the rim of the working platform.

The upper ends of the legs of the assembly may be pivoted onto cross-bars located in the working platform.

Preferably, at least one leg is fitted at its end with an angularly rotationally adjustable bifurcation providing two feet for the one leg. The bifurcation may be laterally angularly rotationally adjustable.

For a better understanding of the present invention and to show how it may be put into effect reference will now be made, by way of example, to the accompanying drawings in which:
Figure 1 is a front view of a preferred embodiment of tripod step ladder according to the present invention, when in an erect configuration;
Figure 2 is a front view of the step ladder of Figure 1 when in a collapsed configuration;
Figure 3 is a side view of the erect step ladder of Figure 1;
Figure 4 is a side view of the collapsed step ladder of Figure 2;
Figure 5 is an exploded view of the pivotal assembly of the step ladder of Figures 1 to 4;
Figure 6 is a side view of one of the legs of Figure 5 when in a coupled and erect configuration;
Figure 7 is a view of the working platform of Figures 5 and 6 from underneath; and
Figure 8 is an exploded view of the bottom of the front leg.

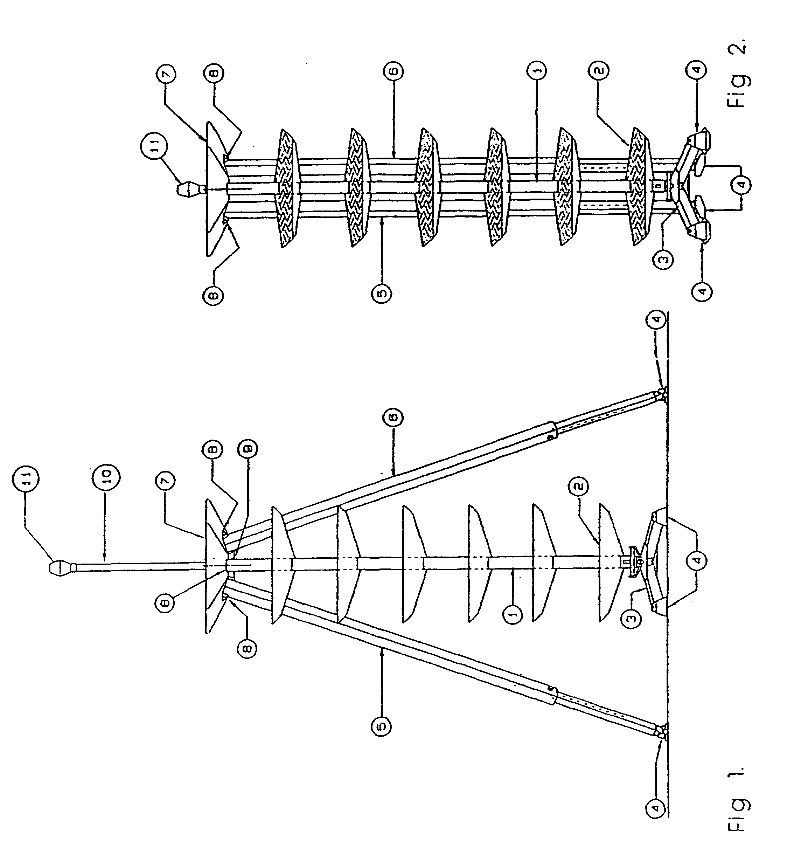

Figure 1 shows a three-legged tripod step ladder in erect configuration, resting on a flat surface. A hollow-section aluminium front leg 1 has fixed steps 2 welded at equal intervals along the front leg 1, each step being folded from sheet aluminium.

In an alternative embodiment, the leg 1 could be provided by two uprights having steps connected therebetween as in a conventional step ladder.

Two hollow-section aluminium rear legs 5 and 6 are provided behind the front leg 1. For maximum stability the three legs 1, 5 and 6 are arranged at equal angles of 120° around the vertical axis of the ladder assembly, and the legs 5 and 6 are provided with adjustable telescopic extensions. If required, leg 1 can be similarly telescopically adjustable also.

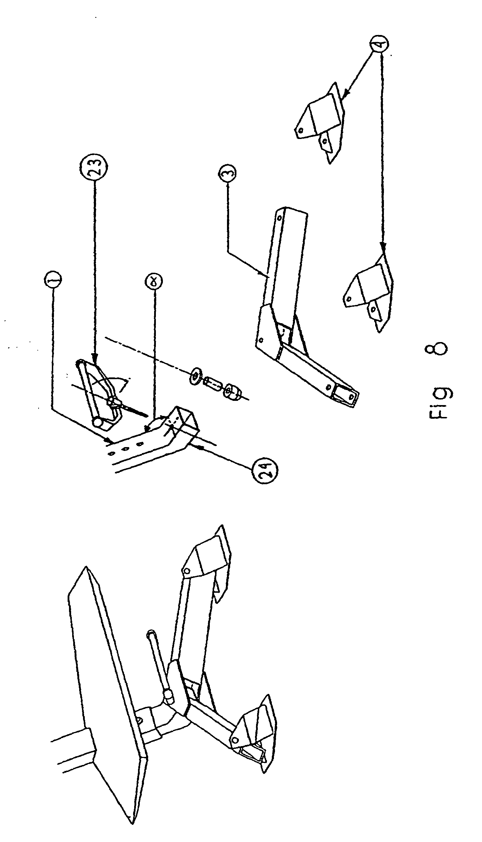

Moreover the front leg 1 is provided with a divided support leg in the form of a bifurcation 3, whilst each of the two ends of the bifurcation 3 is provided with a hinged foot 4, as is the bottom end of each of the telescopic legs 5 and 6. The bifurcation 3 is angularly rotationally adjustable, and can be locked, as can better be seen in Figure 8.

The three legs 1, 5 and 6 are pivoted at their upper ends within a working platform 7, as will be described in more detail hereinafter.

The working platform 7 is provided by a shell made of folded sheet aluminium having a flat non-slip upper working surface. The non-slip feature may be provided by a patterned surface of the sheet aluminium, and may be provided for the steps 2 also. The sheet aluminium is folded-over downwardly at the lateral edges of the platform 7, to provide lower inner recessed edges 8 providing stops for the outward pivotal movement of the three legs 1, 5 and 6, as will be described in more detail hereinafter.

The legs 1, 5 and 6 are wedged outwardly against the stop edges 8 by a wedging body 9 connected to the bottom of a support rod 10 having a handle 11 at its top end.

Figure 2 shows the assembly of Figure 1 in a collapsed position, with the legs 5 and 6 being pivoted inwardly to lie parallel with the front leg 1, and with the handle 11 being in its downwards position to move the wedging body 9 itself downwardly.

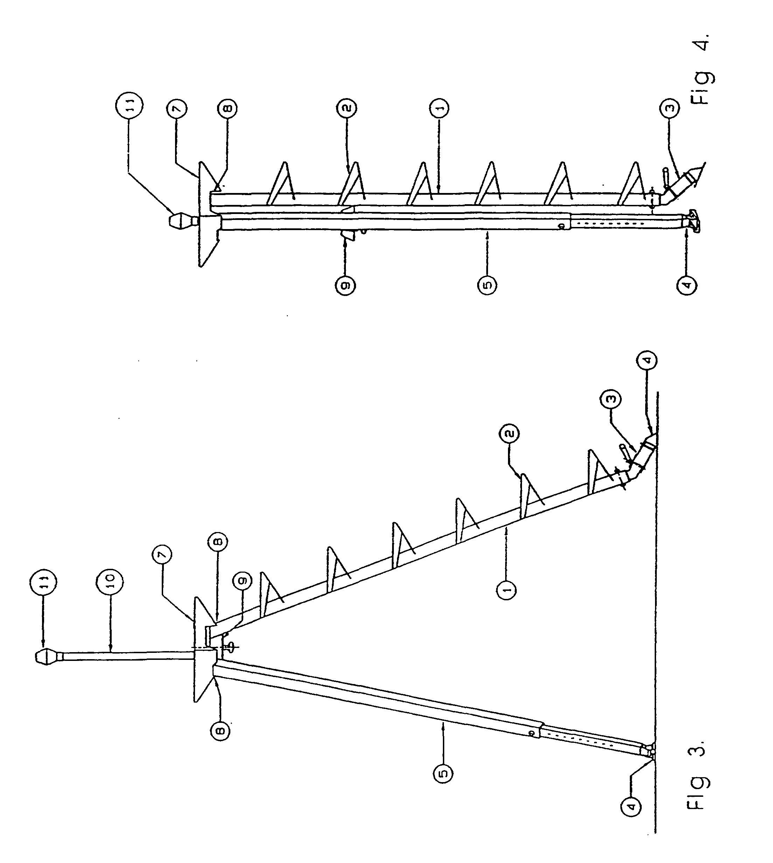

Figure 3 shows the erect assembly of Figure 1 from the side, and indicates how the bifurcation 3 extends forwardly to provide a broader support base for the erect assembly.

Figure 4 similarly shows a side view of the collapsed assembly of Figure 2, showing the wedging body 9 and the handle 11 in their downwards position.

Normally, the assembly will be stored in the collapsed position shown in Figures 2 and 4. To put the assembly into its erect condition, the user stands the assembly upright on its feet 4, and moves the three legs 1, 5 and 6 outwardly until they abut at their upper ends against their associated respective stops 8.

In order to secure the rigidity and stability of the assembly, the user will grasp the wedging block 9 which is still in the downwards position shown in Figures 2 and 4, and (after rotational adjustment as described hereinafter) push it upwards into its uppermost position as shown in Figures 1 and 3, wherein the wedging block 9 abuts firmly against the inner surfaces of the legs 1, 5 and 6.

In this way the wedging block 9 is moved upwards between the legs 1, 5 and 6 to urge them outwardly, by a wedging action, against the stop edges 8 thereby to define with the stop edges 8, a predetermined pivotal position of the legs 1, 5 and 6 as is shown in Figures 1 and 3.

Of course no further outward pivoting movement is caused by the wedging block 9, because the legs 1, 5 and 6 have already been put into their extreme pivotal positions manually by the user. Nevertheless, the outwards urging on the legs 1, 5 and 6 by the wedging block 9 prevents any accidental collapse of the assembly.

The reverse procedure is followed to collapse the assembly after use, except that the wedging block 9 is moved downwards from its wedging position by means of downwards pressure exerted by the user on support rod 10 via handle 11.

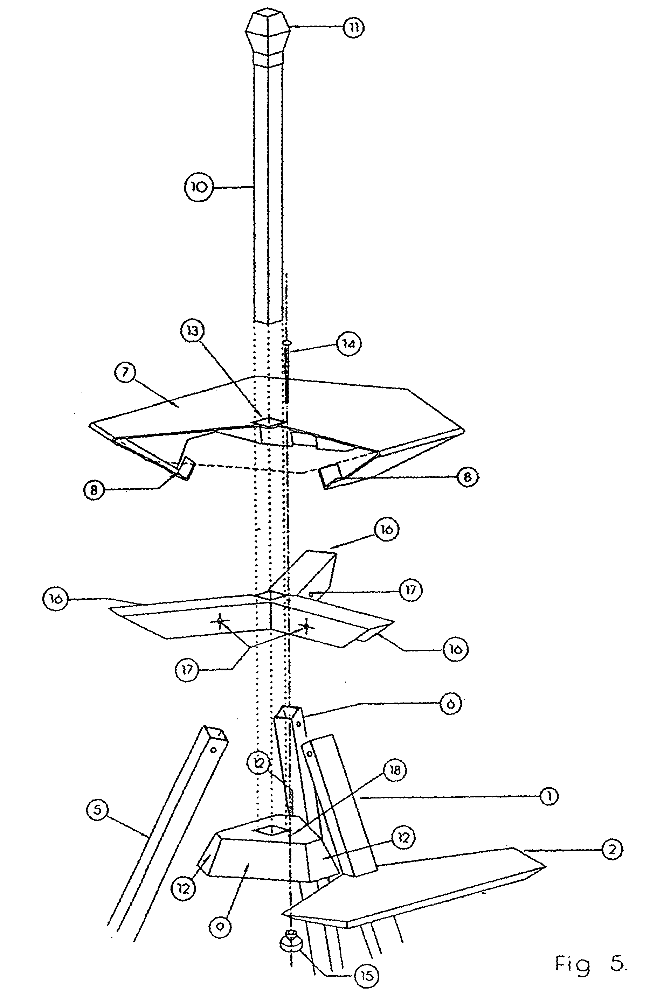

Figure 5 is an exploded view of the top end of the ladder assembly, and provides a better understanding of the pivoting and securing mechanism. For the sake of clarity, only the top ends of the legs 1, 5 and 6 are shown, with just the top step 2 as welded to the front leg 1.

The working platform 7 is formed of sheet aluminium, providing a flat hexagonal non-slip upper working area at the edges of which the sheet aluminium is folded-over to extend below the upper surface of the working platform 7. A square aperture 13 is provided at the centre of the upper surface of the working platform 7, and through it extends the support rod 10 having the handle 11 at its upper end. At its lower end the support rod 10 is securely push-fitted into a square socket at the centre of the wedging block 9.

The wedging block 9 is seen to have three angled wedging surfaces 12 distributed around the edge of the wedging block 12 at equal angular distances of 120°. In this way the wedging surfaces 12 can cooperate with the inner surfaces of the three tripod legs 1, 5 and 6 respectively, to exert a strong wedging action thereon.

In order to secure the wedging block 9 and the support rod 10 in their upper positions in the erect configuration of the ladder assembly, a screw-threaded bolt 14 is secured to the working platform 7 to extend downwardly below it, so that as the wedging block 9 is pushed by the user from below into its uppermost position, the bolt 14 enters with clearance an aperture 18 extending throughout the wedging block 9.

When the assembly is in its erect configuration, with the wedging block 9 in its uppermost position, a securing nut 15 is screwed-onto the bottom end of bolt 14 by the user where the bolt 14 protrudes from the lower surface of the wedging block 9. The securing nut 15 is then tightened against the bottom surface of the wedging block 9, in order to maintain a fixed vertical relationship between the working platform 7 and the bolt 14 on the one hand, and the wedging block 9 and its actuating rod 10 on the other hand.

Also shown in Figure 5 are three cross members 16 welded together at 120° intervals around the vertical axis, the welded assembly of cross members 16 being itself fixed onto the bottom of the upper surface of the working platform 7, thereby to be housed within the sheet aluminium shell providing the working platform 7.

The support rod 10 passes through a gap between the inner ends of the three cross-members 16, whilst the top ends of the three legs 1, 5 and 6 are pivotally secured to respective ones of the cross-members 16, by bolts (not shown) passing through holes 17 in the cross-members 16, and corresponding holes at the top ends of the legs 1, 5 and 6.

In order to collapse the assembly, the securing nut 15 is first removed, to permit downwards movement of the wedging block 9. Then the user pushes down on the handle 11, which via the support rod 10 pushes the wedging block downwards out of its wedging position, until handle 11 abuts against the working surface of the working platform 7. Wedging block 9 is then forcibly pulled off the bottom of the support rod 10, and replaced thereon after rotation by 180°. In this way the wedging surfaces 12 are no longer aligned with the legs 1, 5 and 6, and sufficient clearance is achieved to allow the legs 1, 5 and 6 to be pivoted inwardly to the compact configuration shown in Figures 2 and 4.

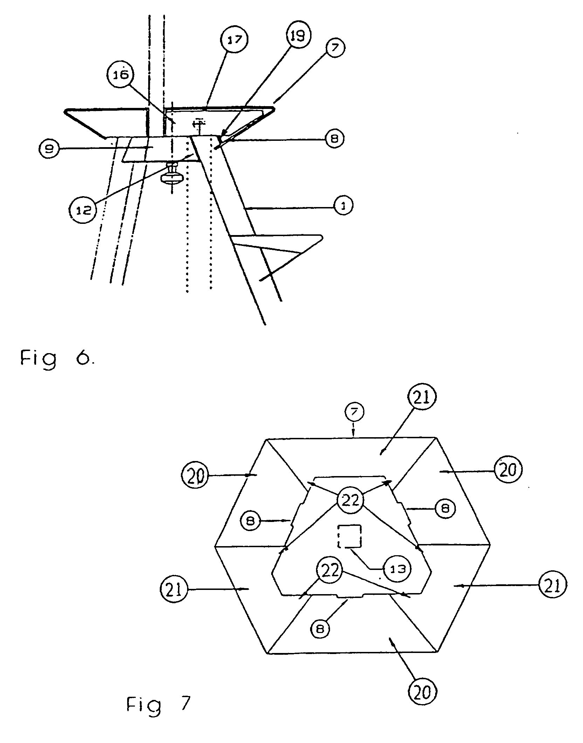

Figure 6 is a side view of a detail at the top end of the leg 1 when secured in the erect configuration of the ladder assembly as shown in Figures 1 and 3. The top end of the leg 1 is shown pivotally hinged to the associated cross-member 16, with the outer edge of the working platform being provided by sheet aluminium folded-over to provide inwardly a stop edge 8 defining a limit of lateral outwards pivoting for the leg 1.

The wedging block 9 is shown in its upper position, with one of its wedging surfaces 12 urging the leg 1 outwardly against the stop edge 8 thereby to define, with the stop edge 8, a predetermined pivotal position of leg 1. The stop edge 8 is seen to be reinforced by a folded inner support 19 which improves the retaining action of the stop edge 8 and provides a larger support area.

Each of the other legs 5 and 6, when seen from the side at the upper end, has the same appearance as is shown in Figure 6.

Figure 7 shows from below the hexagonal working platform 7. It can be seen that the stop edges 8 are formed on flaps 20 and are spaced angularly apart by 120° around the vertical axis, with each stop edge 8 being provided by a recessed rim of the sheet aluminium material which is folded-over as shown in Figure 6. The recessed form of the stop edge 8 prevents excess sideways movement of the contained leg.

Whilst the three flaps 20 of sheet aluminium material providing the stop edges 8 extend a relatively long way towards the centre of the working platform 7 after being folded over it can be seen that, between them, three intervening further flaps 21 of sheet aluminium, although still folded over at corresponding three edges of the working platform 7, nevertheless extend inwardly for only a relatively small distance at their central portions.

Where the flaps 20, 21 meet along their inwardly directed edges, they are welded together for rigidity, with the intervening flaps 21 having inwardly-pointed extensions 22 at their inwardly directed edges for added strength.

It will be appreciated that the illustrated and described step ladder assembly can be quickly and easily converted from the collapsed configuration shown in Figures 2 and 4, into the erect configuration ready for use, as shown in Figures 1 and 3 and as explained in more detail with respect to Figures 5 and 6.

Once the user has pivoted the legs outwardly into the configuration shown in Figures 1 and 3, he can then first remove the wedging block 9 from the end of support rod 10, and then re-fit it rotated by 180° so that the wedging surfaces 12 again are aligned with the legs 1, 5 and 6. The user can then push the wedging block 9 upwardly, raising the support rod 10 and the handle 11. The legs 1, 5 and 6 are thereby urged outwardly by the wedging surfaces 12 on the block 9 so that the wedging block 9 defines, with the recessed stop edges 8, a predetermined pivotal position of the legs 1, 5 and 6.

The ladder assembly thus assumes a rigid and stable erect configuration, whilst the provision of the bifurcation 3 at the bottom of the front leg 1, together with the hinged feet 4, can provide an especially stable arrangement. Maximum stability is thus provided both on flat and uneven terrains, and further adjustability for greater stability can be achieved by adjusting one or both of the telescopic legs 5 and 6 (or leg 1 if it is telescopic also) as is appropriate.

Figure 8 shows the bifurcation 3 and how it is rotatably mounted at the bottom of leg 1. The feet 4 are shown as being rotatably mounted at the two ends of the bifurcation 3, whilst the bifurcation 3 itself is rotatably mounted at its apex onto the end of leg 1 via an overcentre locking clamp 23 which can fix the angle of adjustment of the bifurcation 3 by shortening itself to clamp together the surfaces it passes through.

The bifurcation 3 is mounted on an end portion 24, of the leg 1, which extends forwardly at an angle α to the remainder of the leg 1 above the end portion 24.

The fact that the end portion 24 of the leg 1 is angled as aforesaid, makes the assembly more stable than if the leg 1 ended as is shown for legs 5 and 6 in Figures 1 to 4, even if a bifurcation such as 3 were to be fitted. This is due to the forwards and lateral support provided by the feet 4 of the bifurcation 3, owing to the forward extent of the angled end portion 24. It is to be noted however, that the forwards angle of the end portion 24 is a preferred and not an essential feature of the bifurcation 3.

Although the preferred embodiment of the invention is described and illustrated as having only three legs, it is to be understood that the invention could be applied to an assembly having more than three legs, i.e. a three-legged assembly to which at least one other leg is added. Thus the invention is intended to cover within its scope for example a four-legged assembly, wherein only three or possibly all four legs are pivotably mounted at their top ends, three or all four legs being associated with stop means to define a limit of outwards pivoting for the legs, and with a wedging means which is moveable upwards between the three or all four legs to urge them outwardly against the stops thereby to define, with the stops, a predetermined pivotal position of the three or all four legs.

Finally, whatever number of legs the assembly has, it is possible for two of the legs to be effectively rigidly joined together at all times, to provide a rigid two-legged assembly. In the embodiments shown in Figures 1 to 4 therefore, for example the two legs 5 and 6 could be rigidly joined together at the angle between them shown in Figure 1, so that in the collapsed state of Figure 2 the legs 5 and 6 would remain at an angle towards another, although the side views of Figures 3 and 4 would remain approximately the same. Such an assembly is disclosed in United States design patent No. 267,817.

In such an assembly as is envisaged, the collapsed configuration of the ladder assembly would of course occupy more storage space than that of the assembly of Figures 1 to 4 as described, but the construction of the pivotal assembly shown in Figure 5 could be designed more simply, since in this case the wedging means would move upwards between the legs to urge the leg 1 outwardly against one stop, and the combination of legs 5 and 6 outwardly against another stop thereby to define, with the two stops, a predetermined pivotal position of the three legs 1, 5 and 6 in the erect configuration of the ladder assembly.

It is to be noted that in such an embodiment where the legs 5 and 6 are always fixedly arranged, the steps of the ladder could extend between legs 5 and 6 instead of being mounted on leg 1, and the rigid relative positioning of the legs 5 and 6 could be achieved by the rigid connections between the two legs 5 and 6 by the rigid steps, again as disclosed in United States design patent No. 267,817.

Further developments of the illustrated and described embodiment could be: optional extensions to leg and step elements to give increased height; optional cable stays to legs for extra weight bearing to prevent leg splay; optional clip-on steps to fit to legs 5 and 6 for multiple person usage.

## Claims

1. An assembly having three legs (1, 5, 6) which are pivotably mounted at their upper ends, said legs (1, 5, 6) being associated with stop means (8) to define a limit of outward pivoting for said legs (1, 5, 6) and with wedging means (9) movable upwards between said legs (1, 5, 6) to urge them outwardly against said stop means (8) thereby to define, with said stop means (8), predetermined pivotal positions of said legs (1, 5, 6), said wedging means (9) being coupled to a support member (10) which is arranged to move upwardly with said wedging means (9) to provide a support above an apex of the assembly, said support member (10) also being arranged to move downwardly from above the apex of the assembly thereby to move the wedging means (9) downwardly,
**characterised in that** the assembly is a ladder comprising steps (2) mounted on at least one of the legs (1, 5, 6) and leading upwardly to a working platform (7) which is supported at the apex of the assembly and is adapted to carry a person when the ladder is in an erected configuration with its legs (1, 5, 6) urged outwardly by the wedging means (9) being in an upward wedging position, and with the support member (10) being in a corresponding upwards position to be able to serve as a steadying support above the working platform (7) for a person on the working platform (7).

2. An assembly as claimed in claim 1, wherein said wedging means (9) comprises a wedging member having a plurality of wedging surfaces (12) aligned and cooperable with respective ones of the legs (1, 5, 6) to urge them outwardly as aforesaid.

3. An assembly as claimed in claim 2, wherein the wedging member is rotatable so that the wedging surfaces (12) are no longer aligned with the legs (1, 5, 6), thereby providing clearance to allow the legs (1, 5, 6) to be pivoted inwards after the support member (10) has been moved downwards.

4. An assembly as claimed in any one of the preceding claims, wherein a top end of said support member (10) is formed with an actuating handle (11) or other member for moving the support member (10) and the wedging means (9) downwards, said handle (11) or other member also serving as a steadying support for a person on said working platform (7) when the assembly in an erected configuration.

5. An assembly as claimed in any one of the preceding claims, wherein said legs (1, 5, 6) are pivoted at or just below the working platform (7) of the assembly, with said stop means (8) being provided as part of, or secured to, said working platform (7).

6. An assembly as claimed in any one of the preceding claims, wherein said stop means (8) is provided at least partly by edges of rigid sheet material forming part of the working platform (7) of the assembly.

7. An assembly as claimed in claim 6, wherein said edges are lower inner edges of said rigid sheet material after said rigid sheet material has been folded-under along a rim of the working platform (7).

8. An assembly as claimed in any one of the preceding claims, wherein the upper ends of the legs (1, 5, 6) are pivotally mounted on cross-members (16) located in the working platform (7).

9. An assembly as claimed in any one of the preceding claims, wherein at least one of the legs (1, 5, 6) is telescopic so as to have an adjustable length for when the assembly is in use.

10. An assembly as claimed in claim 9, wherein each one of said legs (1, 5, 6) is telescopic as aforesaid.

11. An assembly as claimed in any one of the preceding claims, wherein the wedging means (9) is associated with a fastening means to secure the wedging means (9) in its wedging uppermost position when the assembly is in use.

12. An assembly as claimed in claim 11, wherein said fastening means comprises a bolt (14) extending downwardly from the working platform (7), and a co-operable nut (15) at the bottom surface of the wedging means (9).

13. An assembly as claimed in any one of the preceding claims, wherein the support member (10) extends through an aperture (13) in the working platform (7).

14. An assembly as claimed in any one of the preceding claims, wherein at least one of the legs (1) is fitted at its lower end with an angularly rotationally adjustable bifurcation (3) providing two feet (4) for said one leg.

15. An assembly as claimed in claim 14, wherein the bifurcation (3) is laterally ongularly rotationally adjustable.

16. An assembly as claimed in claim 14 or 15, wherein said bifurcation (3) extends forwardly of the leg (1) on which it is fitted.

17. An assembly as claimed in claim 14, 15 or 16, wherein the bifurcation (3) comprises fixing means (23) for fixing the bifurcation (3) in an angularly rotationally adjusted position.

18. An assembly as claimed in any one of claims 14 to 17, wherein the bifurcation (3) is in the form substantially of a V-shape pivotably mounted at or adjacent its apex, and with the two feet (4) being provided at the ends of the two limbs of the V-shape.

19. An assembly as claimed in any preceding claim, wherein said steps (2) are mounted on and along a single one of said legs (1).

## Patentansprüche

1. Anordnung mit drei Beinen (1, 5, 6), die an ihren oberen Enden gelenkig befestigt sind, wobei den Beinen (1, 5, 6) eine Anschlageinrichtung (8) zum Definieren einer Grenze einer Drehung der Beine (1, 5, 6) nach außen und eine zwischen den Beinen (1, 5, 6) nach oben bewegbare Keileinrichtung (9), um sie gegen die Anschlageinrichtung (8) nach außen zu drücken, um dadurch mit der Anschlageinrichtung (8) vorbestimmte Drehpositionen der Beine (1, 5, 6) zu definieren, zugeordnet sind, wobei die Keileinrichtung (9) mit einem Tragelement (10) gekoppelt ist, das angeordnet ist, um sich mit dem Keilelement (9) nach oben zu bewegen, um eine Stütze über einem Scheitel der Anordnung vorzusehen, wobei das Tragelement (10) auch angeordnet ist, um sich von dem Scheitel der Anordnung nach unten zu bewegen, um dadurch die Keileinrichtung (9) nach unten zu bewegen,
**dadurch gekennzeichnet,**
**dass** die Anordnung eine Leiter mit Stufen (2) ist, die an wenigstens einem der Beine (1, 5, 6) befestigt sind und nach oben zu einer Arbeitsplattform (7) führen, die an dem Scheitel der Anordnung getragen ist und zum Tragen einer Person ausgebildet ist, wenn die Leiter sich in einer aufgerichteten Konfiguration befindet, bei der ihre Beine (1, 5, 6) durch die sich in einer oberen Keilposition befindenden Keileinrichtung (9) nach außen gedrückt sind und das Tragelement (10) sich in einer entsprechenden oberen Position befindet, um als eine Stütze über der Arbeitsplattform (7) für eine Person auf der Arbeitsplattform (7) zu dienen.

2. Anordnung nach Anspruch 1, bei welcher die Keileinrichtung (9) ein Keilelement mit mehreren Keilflächen (12) aufweist, die mit einem jeweiligen der Beine (1, 5, 6) ausgerichtet sind und zusammenwirken, um sie wie vorgenannt nach außen zu drücken.

3. Anordnung nach Anspruch 2, bei welcher das Keilelement so drehbar ist, dass die Keilflächen (12) nicht länger mit den Beinen (1, 5, 6) ausgerichtet sind, wodurch ein Freiraum vorgesehen wird, um die Beine (1, 5, 6) nach innen drehen zu lassen, nachdem das Tragelement (10) nach unten bewegt worden ist.

4. Anordnung nach einem der vorherigen Ansprüche, bei welcher ein oberes Ende des Tragelements (10) mit einem Betätigungsgriff (11) oder einem anderen Element zum Bewegen des Tragelements (10) und der Keileinrichtung (9) nach unten ausgebildet ist, wobei der Griff (11) oder das andere Element auch als eine Stütze für eine Person auf der Arbeitsplattform (7) bei der Anordnung in einer aufgerichteten Konfiguration dient.

5. Anordnung nach einem der vorherigen Ansprüche, bei welcher die Beine (1, 5, 6) an oder unmittelbar unter der Arbeitsplattform (7) der Anordnung gedreht werden, wobei die Anschlageinrichtung (8) als ein Teil der Arbeitsplattform (7) vorgesehen oder an dieser befestigt ist.

6. Anordnung nach einem der vorherigen Ansprüche, bei welcher die Anschlageinrichtung (8) wenigstens teilweise durch Kanten eines steifen Blechmaterials vorgesehen ist, das einen Teil der Arbeitsplattform (7) der Anordnung bildet.

7. Anordnung nach Anspruch 6, bei welcher die Kanten untere Innenkanten des steifen Blechmaterials sind, nachdem das steife Blechmaterial entlang eines Randes der Arbeitsplattform (7) nach unten gefaltet worden ist.

8. Anordnung nach einem der vorherigen Ansprüche, bei welcher die oberen Enden der Beine (1, 5, 6) gelenkig an Querelementen (16) befestigt sind, die in der Arbeitsplattform (7) angeordnet sind.

9. Anordnung nach einem der vorherigen Ansprüche, bei welcher wenigstens eines der Beine (1, 5, 6) teleskopartig ist, um so eine einstellbare Länge zu haben, wenn die Anordnung in Gebrauch ist.

10. Anordnung nach Anspruch 9, bei welcher jedes der Beine (1, 5, 6) wie vorgenannt teleskopartig ist.

11. Anordnung nach einem der vorherigen Ansprüche, bei welcher der Keileinrichtung (9) eine Befestigungseinrichtung zum Befestigen der Keileinrichtung (9) in ihrer obersten Keilstellung, wenn die Anordnung in Gebrauch ist, zugeordnet ist.

12. Anordnung nach Anspruch 11, bei welcher die Befestigungseinrichtung eine sich von der Arbeitsplattform (7) nach unten erstreckende Schraube (14) und eine zusammenwirkende Mutter (15) an der Unterseite der Keileinrichtung (9) ist.

13. Anordnung nach einem der vorherigen Ansprüche, bei welcher sich das Tragelement (10) durch eine Öffnung (13) in der Arbeitsplattform (7) erstreckt.

14. Anordnung nach einem der vorherigen Ansprüche, bei welcher wenigstens eines der Beine (1) an seinem unteren Ende mit einer im Winkel drehbar einstellbaren Gabelung (3), die zwei Füße (4) für das eine Bein vorsieht, versehen ist.

15. Anordnung nach Anspruch 14, bei welcher die Gabelung (3) lateral im Winkel dreheinstellbar ist.

16. Anordnung nach Anspruch 14 oder 15, bei welcher sich die Gabelung (3) von dem Bein (1), an dem sie vorgesehen ist, nach vorne erstreckt.

17. Anordnung nach Anspruch 14, 15 oder 16, bei welcher die Gabelung (3) eine Fixiereinrichtung (23) zum Fixieren der Gabelung (3) in einer im Winkel dreheingestellten Stellung aufweist.

18. Anordnung nach einem der Ansprüche 14 bis 17, bei welcher die Gabelung (3) in der Form im Wesentlichen einer V-Form ist, die drehbar an oder angrenzend an ihrem Scheitel befestigt ist, und wobei die zwei Füße (4) an den Enden der zwei Schenkel der V-Form vorgesehen sind.

19. Anordnung nach einem der vorherigen Ansprüche, bei welcher die Stufen (2) an und entlang einem einzigen der Beine (1) befestigt sind.

## Revendications

1. Un ensemble ayant trois pieds (1, 5, 6) qui sont montés de manière pivotante au niveau de leurs extrémités supérieures, lesdits pieds (1, 5, 6) étant associés à des moyens d'arrêt (8) pour définir une limite de pivotement vers l'extérieur pour lesdits pieds (1, 5, 6) et à des moyens de calage (9) déplaçables vers le haut entre lesdits pieds (1, 5, 6) pour les pousser vers l'extérieur contre lesdits moyens d'arrêt (8) de manière ainsi à définir, en liaison avec lesdits moyens d'arrêt (8), des positions de pivotement prédéterminées desdits pieds (1, 5, 6), lesdits moyens de calage (9) étant couplés à un élément de support (10) qui est disposé pour se déplacer vers le haut avec lesdits moyens de calage (9) pour créer un support au-dessus d'un sommet de l'ensemble, ledit élément de support (10) étant également disposé pour se déplacer vers le bas à partir du dessus du sommet de l'ensemble afin de déplacer ainsi des moyens de calage (9) vers le bas,
**caractérisé en ce que** l'ensemble est une échelle comprenant des marches (2) montées sur au moins un des pieds (1, 5, 6) et conduisant vers le haut à une plateforme de travail (7) qui est supportée au niveau du sommet de l'ensemble et est adaptée pour porter une personne lorsque l'échelle est dans une configuration de montage avec ses pieds (1, 5, 6) poussés vers l'extérieur par les moyens de calage (9) qui se trouvent dans une position de calage vers le haut, et avec l'élément de support (10) qui est dans une position correspondante vers le haut pour être susceptible de servir de support de stabilisation au-dessus de la plateforme de travail (7) pour une personne se trouvant sur la plateforme de travail (7).

2. Un ensemble tel que revendiqué à la revendication 1, dans lequel lesdits moyens de calage (9) comprennent un élément de calage présentant une pluralité de surfaces de calage (12) alignées et pouvant coopérer avec un des pieds respectifs (1, 5, 6) pour les pousser vers l'extérieur comme indiqué précédemment.

3. Un ensemble tel que revendiqué à la revendication 2, dans lequel l'élément de calage peut tourner de manière que les surfaces de calage (12) ne soient plus alignées avec les pieds (1, 5, 6), en créant ainsi un jeu pour permettre aux pieds (1, 5, 6) d'être amenés à pivoter vers l'intérieur après que l'élément de support (10) a été déplacé vers le bas.

4. Un ensemble tel que revendiqué dans une quelconque des revendications précédentes, dans lequel une extrémité supérieure dudit élément de support (10) présente une poignée d'actionnement (11) ou un autre élément pour déplacer l'élément de support (10) et les moyens de calage (9) vers le bas, ladite poignée (11) ou autre élément servant également de support de stabilisation pour une personne se trouvant sur ladite plateforme de travail (7) lorsque l'ensemble est dans une configuration de montage.

5. Un ensemble tel que revendiqué dans l'une quelconque des revendications précédentes, dans lequel lesdits pieds (1, 5, 6) sont amenés à pivoter au niveau de la plateforme de travail (7) de l'ensemble ou juste en dessous de celle-ci, avec lesdits moyens d'arrêt (8) qui sont prévus pour faire partie de ladite plateforme de travail (7) ou être fixés à celle-ci.

6. Un ensemble tel que revendiqué dans l'une quelconque des revendications précédentes, dans lequel lesdits moyens d'arrêt (8) sont formés au moins en partie par des bords d'une feuille de matière rigide faisant partie de la plateforme de travail (7) de l'ensemble.

7. Un ensemble tel que revendiqué à la revendication 6, dans lequel lesdits bords sont des bords inférieurs internes de ladite feuille de matière rigide après que ladite feuille de matière rigide a été repliée le long d'un rebord de la plateforme de travail (7).

8. Un ensemble tel que revendiqué dans l'une quelconque des revendications précédentes, dans lequel les extrémités supérieures des pieds (1, 5, 6) sont montées de manière pivotante sur des traverses (16) situées dans la plateforme de travail (7).

9. Un ensemble tel que revendiqué dans l'une quelconque des revendications précédentes, dans lequel au moins l'un des pieds (1, 5, 6) est télescopique de manière à présenter une longueur réglable lorsque l'ensemble est en service.

10. Un ensemble tel que revendiqué à la revendication 9, dans lequel chacun desdits pieds (1, 5, 6) est télescopique comme indiqué précédemment.

11. Un ensemble tel que revendiqué dans l'une quelconque des revendications précédentes, dans lequel les moyens de calage (9) sont associés à des moyens de fixation pour fixer les moyens de calage (9) dans leur position de calage la plus supérieure lorsque l'ensemble est en service.

12. Un ensemble tel que revendiqué à la revendication 11, dans lequel lesdits moyens de fixation comprennent un boulon (14) s'étendant vers le bas de la plateforme de travail (7), et un écrou coopérant (15) situé à la surface inférieure des moyens de calage (9).

13. Un ensemble tel que revendiqué dans l'une quelconque des revendications précédentes, dans lequel l'élément de support (10) s'étend à travers une ouverture (13) formée dans la plateforme de travail (7).

14. Un ensemble tel que revendiqué dans l'une quelconque des revendications précédentes, dans lequel au moins l'un des pieds (1) présente, à son extrémité inférieure, une bifurcation (3) réglable angulairement en rotation et fournissant deux pattes de support pour ce dit pied.

15. Un ensemble tel que revendiqué à la revendication 14, dans lequel la bifurcation (3) est réglable en rotation de manière latéralement angulaire.

16. Un ensemble tel que revendiqué à la revendication 14 ou 15, dans lequel ladite bifurcation (3) s'étend vers l'avant du pied (1) sur lequel elle est montée.

17. Un ensemble tel que revendiqué à la revendication 14, 15 ou 16, dans lequel la bifurcation (3) comprend des moyens de fixation (23) pour fixer la bifurcation (3) dans une position réglée angulairement en rotation.

18. Un ensemble tel que revendiqué dans l'une quelconque des revendications 14 à 17, dans lequel la bifurcation (3) présente sensiblement la forme d'un V monté de manière pivotante au niveau de son sommet ou de manière adjacente à celui-ci, et avec les deux pattes de support (4) qui sont prévues à l'extrémité des deux branches de la forme en V.

19. Un ensemble tel que revendiqué dans une quelconque revendication précédente, dans lequel lesdites marches (2) sont montées sur un seul desdits pieds (1) et le long de celui-ci.
